(19) Europäisches Patentamt / European Patent Office / Office européen des brevets

(11) **EP 4 796 500 A1**

(12) **EUROPEAN PATENT APPLICATION**

(43) Date of publication:
**26.08.2026 Bulletin 2026/35**

(21) Application number: **26157490.9**

(22) Date of filing: **10.02.2026**

(51) International Patent Classification (IPC):
***C01G 53/00*** *(2025.01)* ***H01M 4/00*** *(2006.01)*
***H01M 4/505*** *(2010.01)* ***H01M 4/525*** *(2010.01)*

(52) Cooperative Patent Classification (CPC):
**C01G 53/506; C01G 53/84; H01M 4/366; H01M 4/505; H01M 4/525;** C01P 2002/34; C01P 2002/52; C01P 2004/54; C01P 2004/61; C01P 2004/62; C01P 2004/80; C01P 2006/40; H01M 2004/028; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.02.2025 JP 2025024229**

(71) Applicant: **Toyota Jidosha Kabushiki Kaisha**
**Toyota-shi, Aichi-ken 471-8571 (JP)**

(72) Inventors:
- **OHSAWA, Ryosuke**
  **Toyota-shi, 471-8571 (JP)**
- **KINOSHITA, Taku**
  **Toyota-shi, 471-8571 (JP)**

(74) Representative: **Kuhnen & Wacker**
**Patent- und Rechtsanwaltsbüro PartG mbB**
**Prinz-Ludwig-Straße 40 A**
**85354 Freising (DE)**

# (54) CATHODE ACTIVE MATERIAL, CATHODE MIXTURE, BATTERY, AND METHOD FOR PRODUCING CATHODE ACTIVE MATERIAL

(57) A main object of the present disclosure is to provide a cathode active material with which the increase in resistance in storage is reduced. The present disclosure achieves the object by providing a cathode active material including: a crystalline primary particle containing Li, TM, which is a transition metal, and O, wherein the cathode active material is a single crystalline active material configured by the primary particle; and the cathode active material includes a compound A containing La, Ni, and O, a compound B containing Li, W, and O, and a compound C containing Li, B, P, and O, on a surface of the primary particle.

FIG. 1

10
A
1
B
C

EP 4 796 500 A1

## Description

Technical Field

The present disclosure relates to a cathode active material, a cathode mixture, a battery, and a method for producing the cathode active material.

Background Art

In recent years, the development of a battery has been actively carried out. For example, the development of a battery used for battery electric vehicles (BEV), plug-in hybrid electric vehicles (PHEV), or hybrid electric vehicles (HEV) has been advanced in the automobile industry. As a cathode active material used for a battery, an active material including a transition metal such as Ni, Co, and Mn has been known.

For example, Patent Literature 1 discloses a W-containing high nickel ternary cathode material of which chemical formula is $Li_aNi_xCo_yMn_{1-x-y}W_bM_cO_2$, wherein the high nickel ternary cathode material includes a spherical secondary particle and a single crystalline particle at the same time, a W element is basically not included inside the single crystalline particle, and a W element is doped to the spherical secondary particle.

Patent Literature 2 discloses a single crystalline multi-element cathode material, wherein a ratio of a length of a longest diagonal line to a length of a shortest diagonal line of a single crystal particle of the single crystalline multi-element cathode material measured by a SEM is defined as a roundness R, and the R is 1 or more, $D_{10}$, $D_{50}$, and $D_{90}$ of the single crystal particle of the single crystalline multi-element cathode material satisfy $K_{90} = (D_{90} - D_{10})/ D_{50}$, and a product of $K_{90}$ and R is 1.20 to 1.40.

Citation List

Patent Literatures

Patent Literature 1: Japanese Unexamined Patent Publication (JP-A) No. 2022-542774
Patent Literature 2: Japanese Unexamined Patent Publication (JP-A) No. 2024-511223

Summary of Disclosure

Technical Problem

From a viewpoint of improving performance of a battery, reduction of resistance increase in storage has been required. The present disclosure has been made in view of the above circumstances and a main object thereof is to provide a cathode active material with which the increase in resistance in storage is reduced.

Solution to Problem

[1] A cathode active material comprising:
a crystalline primary particle containing Li, TM, which is a transition metal, and O, wherein

the cathode active material is a single crystalline active material configured by the primary particle; and
the cathode active material includes a compound A containing La, Ni, and O, a compound B containing Li, W, and O, and a compound C containing Li, B, P, and O, on a surface of the primary particle.

[2] The cathode active material according to [1], wherein a particle size of the primary particle is 0.5 μm or more.
[3] The cathode active material according to [1] or [2], wherein the primary particle contains at least one kind of Ni, Co, and Mn as the TM.
[4] The cathode active material according to any one of [1] to [3], wherein the primary particle includes a layered rock salt type crystal structure.
[5] The cathode active material according to any one of [1] to [4], wherein the compound A is in a particle shape.
[6] The cathode active material according to any one of [1] to [5], wherein the compound B is in a film shape.

[7] The cathode active material according to any one of [1] to [6], wherein the compound C is amorphous.
[8] A cathode mixture comprising the cathode active material according to any one of [1] to [7].
[9] A battery comprising a cathode active material layer containing a cathode active material, an anode active material layer containing an anode active material, and an electrolyte layer arranged between the cathode active material layer and the anode active material layer, wherein
the cathode active material layer contains the cathode mixture according to [8].
[10] A method for producing the cathode active material according to any one of [1] to [7], the method comprising:

a first burning step of burning a first mixture that includes: a transition metal hydroxide containing the TM; a Li source; a La source; a W source; and a Ni source, at a temperature $T_1$ to obtain a first burned body,
a second burning step of burning the first burned body at a temperature $T_2$ to obtain a second burned body, and
a third burning step of burning a second mixture produced by adding a B source and a P source to the second burned body, at a temperature of $T_3$ to form a third burned body, wherein
the temperature $T_2$ in the second burning step is lower than the temperature $T_1$ in the first burning step,
the temperature $T_3$ in the third burning step is lower than the temperature $T_2$ in the second burning step,
the temperature $T_1$ is 500°C or more and 800°C or less,
the temperature $T_2$ is 400°C or more and 600°C or less, and
the temperature $T_3$ is 350°C or more and 550°C or less.

[11] The method for producing the cathode active material according to [10], wherein the transition metal hydroxide includes at least Ni as the TM, which is also used as the Ni source.

Advantageous Effects of Disclosure

The present disclosure exhibits an effect of providing a cathode active material with which the increase in resistance in storage is reduced.

Brief Description of Drawings

FIG. 1 is a schematic cross-sectional view exemplifying the cathode active material in the present disclosure.
FIG. 2 is a schematic cross-sectional view exemplifying the battery in the present disclosure.
FIG. 3 is a flow chart exemplifying the method for producing the cathode active material in the present disclosure.

Description of Embodiments

Embodiments will be explained below with reference to drawings. However, the present disclosure is enforceable in a variety of different forms, and thus should not be taken as is limited to the contents described in the embodiments exemplified as below. Also, the drawings may show width, thickness, and shape of each part schematically comparing to the actual form in order to explain more clearly in some cases; however, it is merely an example, and thus does not limit the interpretation.

A. Cathode active material

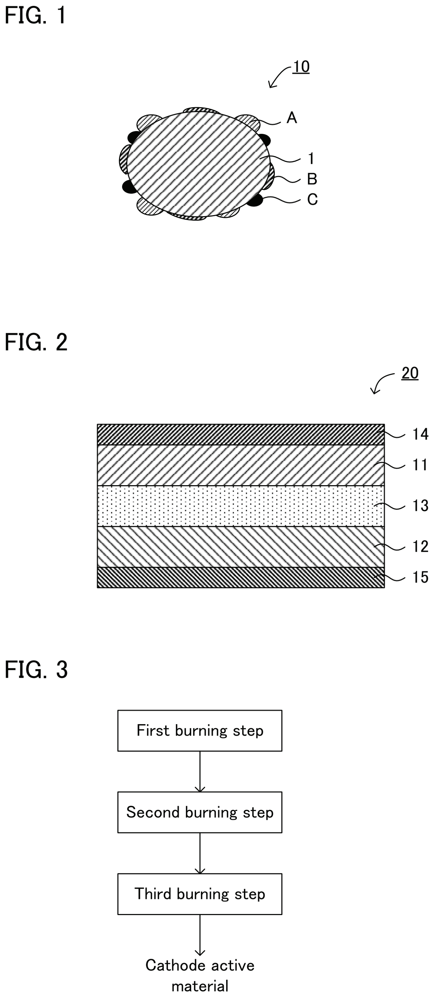

FIG. 1 is a schematic cross-sectional view exemplifying the cathode active material in the present disclosure. As shown in FIG. 1, cathode active material 10 includes crystalline primary particle 1 containing Li, TM, which is a transition metal, and O. The cathode active material 10 is a single crystalline active material configured by the primary particle 1. Also, the cathode active material 10 includes a compound A containing La, Ni, and O, a compound B containing Li, W, and O, and a compound C containing Li, B, P, and O, on a surface of the primary particle 1.
According to the present disclosure, the compound C (compound containing Li, B, P and O) is present on the surface of the primary particle, and thus a cathode active material with which the increase in resistance in storage is reduced can be obtained. The reason therefor is presumed that the presence of the compound C on the surface of the primary particle (particularly co-existence of P and B) imparts excellent oxide resistance to the surface of the primary particle, and thus the oxidation decomposition of the solvent of the liquid electrolyte between the liquid electrolyte and the primary particle can be inhibited in a state of charge. Also, in the present disclosure, the compound A (compound containing La, Ni and O) with excellent electron conductivity is present on the surface of the primary particle, and thus the reduction of resistance can be achieved. Also, in the present disclosure, the compound B (compound containing Li, W and

O) with excellent ion conductivity is present on the surface of the primary particle, and thus, similarly the reduction of resistance can be achieved. Also, since the compound B is present, resistance increase over time can be suppressed. The reason therefor is presumed as follows. That is, it is presumed that, since the compound A has excellent electron conductivity, it is possible to achieve the reduction of resistance, but the resistant component (decomposition product) is accumulated by side reactions of electron conduction, and the resistance increase over time occurs. In contrast, the compound B has appropriately low electron conductivity, and thus it is presumed that the accumulation of the resistant component (decomposition product) in the cathode active material can be suppressed, and the resistance increase over time can be suppressed.

Also, in Example 3 of Patent Literature 1 described above, a cathode material represented by $Li_{1.0029}Ni_{0.83}Co_{0.11}Mn_{0.06}W_{0.0009}La_{0.002}O_2$ is disclosed. In more specific, it is described that a mixture including a precursor A including Ni, Co, and Mn but not including W, a precursor B including Ni, Co, Mn, and W, LiOH, and $La_2O_3$, is burned at a high temperature of 880°C. However, Patent Literature 1 neither describes nor suggests about the compound A (compound containing La, Ni, and O) in the present disclosure.

Also, Patent Literature 2 described above discloses a cathode material represented by $Li_{1+a}(Ni_xCo_yMn_zG_b)M_cO_{2-d}$, wherein G is one kind or a multiple kinds of Ti, W, V, Ta, Zr, La, Ce, Er, Sr, Si, Al, B, Mg, Co, F, and Y. In other words, La is disclosed as one of the options of G. However, Patent Literature 2 does not disclose Examples using La at all.

1. Primary particle

The primary particle in the present disclosure is a crystalline particle containing Li, TM, which is a transition metal, and O. Examples of the crystal structure of the primary particle may include a layered rock salt type and a spinel type, and the layered rock salt type is preferable. Also, the primary particle may include a crystal structure belonging to a space group R-3m.

The primary particle contains Li, TM, which is a transition metal, and O. The primary particle may contain one kind of the transition metal, may contain two kinds of the transition metal, may contain three kinds of the transition metal, and may contain four or more kinds of the transition metal.

The transition metal is a metal belonging to the 3rd to the 11th groups in the periodic table. The transition metal included in the primary particle may be a metal belonging to the 3rd period, the 4th period, or the 5th period. Examples of the transition metal may include Ti, V, Cr, Mn, Fe, Co, Ni, Zr, Nb, La, and W.

The primary particle preferably contains at least Ni. The reason therefor is to obtain a cathode active material with excellent capacity properties. The ratio of Ni included in the primary particle when all the transition metals included in the primary particle is 1 part by mol is, for example, 0.25 parts by mol or more, may be 0.33 parts by mol or more, may be 0.50 parts by mol or more, may be 0.75 parts by mol or more, may be 0.80 parts by mol or more, and may be 0.90 parts by mol or more. The capacity properties improve when the ratio of Ni is increased.

The primary particle may or may not contain Co. The ratio of Co included in the primary particle when all the transition metals included in the primary particle is 1 part by mol is, for example, 0 part by mol or more, may be 0.05 parts by mol or more, and may be 0.10 parts by mol or more. Meanwhile, the ratio of Co included in the primary particle is, for example, 0.40 parts by mol or less, and may be 0.20 parts by mol or less.

The primary particle may or may not contain Mn. The ratio of Mn included in the primary particle when all the transition metals included in the primary particle is 1 part by mol is, for example, 0 part by mol or more, may be 0.05 parts by mol or more, and may be 0.10 parts by mol or more. Meanwhile, the ratio of Mn included in the primary particle is, for example, 0.40 parts by mol or less, and may be 0.20 parts by mol or less.

The primary particle preferably contains at least one kind of Ni, Co, and Mn. The total ratio of Ni, Co, and Mn included in the primary particle when all the transition metals (TM) included in the primary particle is 1 part by mol is, for example, 0.80 parts by mol or more, may be 0.90 parts by mol or more, and may be 0.95 parts by mol or more. Incidentally, "the total of Ni, Co, and Mn" includes the case where the ratio of one kind or two kinds of Ni, Co, and Mn is 0.

The primary particle may contain other metal $M^1$ (including semimetal) other than Li and the TM, in addition to Li and the TM. Examples of the other metal $M^1$ may include metals belonging to the 12th to the 14th groups in the periodic table. Examples of the metals belonging to the 12th to the 14th groups may include Zn, Al, Si, Ga, Ge, In, and Sn.

The composition of the primary particle is not particularly limited, and may be a composition represented by the general formula $Li_xNi_aCo_bMn_cO_y$, in which $0.1 \leq x \leq 1.5$, $0.5 \leq a \leq 1.0$, $0 \leq b \leq 0.3$, $0 \leq c \leq 0.3$, $a+b+c = 1.0$, and $1.5 \leq y \leq 2.1$.

The "x" may be 0.4 or more, 0.6 or more, 0.8 or more, 1.0 or more, or 1.05 or more, and may be 1.4 or less, or 1.2 or less.

The "y" may be 1.6 or more, 1.7 or more, 1.8 or more, or 1.9 or more, and may be 2.0 or less. The "a" may be 0.6 or more, 0.7 or more, 0.8 or more, or 0.85 or more, and may be 0.9 or less.

The "b" may be 0.01 or more, 0.02 or more, 0.03 or more, 0.04 or more, 0.05 or more, 0.06 or more, 0.07 or more, or 0.075 or more, and may be 0.25 or less, 0.20 or less, 0.15 or less, 0.10 or less, 0.09 or less, or 0.08 or less.

The "c" may be 0.01 or more, 0.02 or more, 0.03 or more, 0.04 or more, 0.05 or more, 0.06 or more, 0.07 or more,

or 0.075 or more, and may be 0.25 or less, 0.20 or less, 0.15 or less, 0.10 or less, 0.09 or less, or 0.08 or less.

The cathode active material in the present disclosure is usually a single crystalline active material configured by the primary particle. The single crystalline active material means that it is not a so-called polycrystalline active material (active material wherein multiple of primary particles aggregate without gaps). The single crystalline active material usually does not aggregate, and is present as one independent particle. In the single crystalline active material, it is preferable that the particle boundary is not confirmed in a scanning electron microscope (SEM) observation (magnification of about 10 thousand times to 30 thousand times). The single crystalline active material has an advantage such that the deterioration over time is less compared to the polycrystalline active material.

The particle size of the primary particle is, for example, 0.5 μm or more, may be 0.6 μm or more, may be 0.8 μm or more, and may be 1.0 μm or more. When the particle size of the primary particle is too small, the particle may not grow enough, and it may be difficult to be produced as a single crystal. Meanwhile, the particle size of the primary particle is, for example, 20 μm or less, may be 15 μm or less, may be 10 μm or less, and may be 5 μm or less. The particle size of the primary particle is obtained as the maximum length of the diameter in the SEM observation. Also, for example, when the primary particle (cathode active material) is included in the cathode active material layer, the particle size (maximum length of the diameter) of the primary particle may be obtained from the cross-sectional image of the cathode active material layer.

2. Compound A

The compound A in the present disclosure contains La, Ni, and O. The compound A usually has high electron conductivity, and thus the reduction in resistance may be achieved when the compound A is present on the surface of the primary particle. The compound A may be directly arranged, or may be arranged interposing another layer (another compound), on the surface of the primary particle, but the former is preferable.

The compound A contains at least La, Ni, and O. The compound A may be configured by only La, Ni, and O, and may further contain additional element. Examples of the additional element may include Li. In other words, the compound A may or may not contain Li. Examples of the composition of the compound A may include $La_aNi_bO_c$, wherein $0.8 \leq a \leq 1.2$, $0.8 \leq b \leq 1.2$, $2.8 \leq c \leq 3.2$. For example, $LaNiO_3$ is a typical Perovskite composition, and has excellent electron conductivity. Other examples of the composition of the compound A may include $La_aLi_bNi_cO_d$, wherein $3.5 \leq a \leq 4.5$, $0.5 \leq b \leq 1.5$, $0.5 \leq c \leq 1.5$, and $7.5 \leq d \leq 8.5$. For example, $La_4LiNiO_8$ is known to have excellent electron conductivity, and presumed to have a crystal phase similar to Perovskite.

The compound A may be crystalline, and may be amorphous, but the former is preferable. Excellent electron conductivity is obtained thereby. "Compound being crystalline" means that a peak derived from a targeted compound is confirmed by an X-ray diffraction using a CuKα ray. Meanwhile, "compound being amorphous" means that a peak derived from a targeted compound is not confirmed by an X-ray diffraction using a CuKα ray. Incidentally, when the targeted compound is amorphous, not a peak but a halo pattern may be observed.

The compound A preferably includes a crystal phase of Perovskite, or a crystal phase similar to Perovskite. The compound A preferably includes the crystal phase of at least one of $LaNiO_3$ and $La_4LiNiO_8$. Excellent electron conductivity is obtained thereby. Incidentally, the crystal phase includes a crystal phase in which a part of the constituent atoms (such as a part of O atom) is deficient, and a crystal phase in which a part of the constituent atoms (such as a part of La atom) is exceedingly present.

The compound A is preferably in a particle shape. "The compound A is in a particle shape" means that, in a cross-section image of the primary particle, when $L_1$ designates a length of the compound A in a normal direction of the surface of the primary particle, and $L_2$ designates a length of the compound A in a direction perpendicular to the normal direction, a ratio $L_2/L_1$, which is a ratio of $L_2$ to $L_1$ is 3.0 or less. The cross-section image of the primary particle is, for example, a SEM cross-section image.

The ratio of La included in the compound A when all the transition metals included in the primary particle is 1 part by mol is, for example, 0.001 parts by mol or more, may be 0.003 parts by mol or more, and may be 0.005 parts by mol or more. Meanwhile, the ratio of La included in the compound A is, for example, 0.100 parts by mol or less, may be 0.080 parts by mol or less, and may be 0.060 parts by mol or less.

The coverage of the compound A to the primary particle is not particularly limited, but for example, it is 10% or more and 90% or less, may be 20% or more and 80% or less, and may be 30% or more and 70% or less. The coverage of the compound A may be obtained by, for example, an outermost surface analysis with an XPS (X-ray spectroscopy method). For example, when the primary particle contains Ni, Co, and Mn as the transition metal TM, the La amount and each TM amount (Ni amount, Co amount, and Mn amount) are obtained by the outermost surface analysis with XPS, and La/(La + TM) can be regarded as the coverage. The coverage of compounds B and C can be obtained in the same manner. Also, the electron conductivity of the compound A is usually higher than the electron conductivity of $La_2O_3$. The electron conductivity of the compound A at 25°C is, for example, $5.0 * 10^{-4}$ S/cm or more, and may be $1.0 * 10^{-3}$ S/cm or more. Also, the compound A (compound containing La, Ni, and O) is arranged on a surface of the primary particle. The primary particle may or may not contain La.

3. Compound B

The cathode active material in the present disclosure includes a compound B containing Li, W, and O on a surface of the primary particle. The compound B usually has high ion conductivity, and thus the reduction in resistance may be achieved when the compound B is present on the surface of the primary particle. Also, since the compound B is present on the surface of the primary particle, resistance increase over time can be suppressed. The compound B may be directly arranged, or may be arranged interposing another layer (another compound), on the surface of the primary particle, but the former is preferable.

The compound B contains at least Li, W, and O. The compound B may be configured by only Li, W, and O, and may further contain additional element. One example of the composition of the compound B may be $Li_aW_bO_c$, wherein $5.5 \leq a \leq 6.5$, $0.5 \leq b \leq 1.5$, and $5.5 \leq c \leq 6.5$. The compound B having the composition above is typically $Li_6WO_6$. Another example of the composition of the compound B may be $Li_aW_bO_c$, wherein $1.5 \leq a \leq 2.5$, $0.5 \leq b \leq 1.5$, and $3.5 \leq c \leq 4.5$. The compound B having the composition above is typically $Li_2WO_4$. Also, another example of the composition of the compound B may be $Li_aW_bO_c$, wherein $3.5 \leq a \leq 4.5$, $0.5 \leq b \leq 1.5$, and $4.5 \leq c \leq 5.5$. The compound B having the composition above is typically $Li_4WO_5$. Further, another example of the composition of the compound B may be $Li_aW_bO_c$, wherein $1.5 \leq a \leq 2.5$, $1.5 \leq b \leq 2.5$, and $6.5 \leq c \leq 7.5$. The compound B having the composition above is typically $Li_2W_2O_7$.

The compound B may be crystalline, and may be amorphous. Also, the compound B is preferably in a film shape. "The compound B is in a film shape" means that, in a cross-section image of the primary particle, when $L_3$ designates a length of the compound B in a normal direction of the surface of the primary particle, and $L_4$ designates a length of the compound B in a direction perpendicular to the normal direction, a ratio $L_4/L_3$, which is a ratio of $L_4$ to $L_3$ is more than 3.0. The cross-section image of the primary particle is, for example, a cross-section image of a transmission microscope (TEM). The thickness (length $L_3$) of the compound B is not particularly limited, and for example, it is 0.5 nm or more and 20 nm or less, and may be 1 nm or more and 15 nm or less. The thickness of the compound B is obtained as an average value of at least 5 points measured by the TEM observation.

The ratio of W included in the compound B when all the transition metals included in the primary particle is 1 part by mol is, for example, 0.001 parts by mol or more, may be 0.003 parts by mol or more, and may be 0.005 parts by mol or more. Meanwhile, the ratio of W included in the compound B is, for example, 0.100 parts by mol or less, may be 0080 parts by mol or less, and may be 0.060 parts by mol or less.

The coverage of the compound B to the primary particle is not particularly limited, and for example, it is 10% or more and 90% or less, may be 20% or more and 80% or less, and may be 30% or more and 70% or less. Also, the ion conductivity of the compound B is usually higher than the ion conductivity of $W_2O_3$. Ion conductivity of the compound B at 25°C is, for example, $1.0 * 10^{-5}$ S/cm or more, and may be $1.0 * 10^{-4}$ S/cm or more. Also, the compound B (compound containing Li, W, and O) is arranged on a surface of the primary particle. The primary particle may or may not contain W.

4. Compound C

The cathode active material in the present disclosure includes a compound C containing Li, B, P, and O, on a surface of the primary particle. When the compound C is present on the surface of the primary particle, a cathode active material capable of reducing the increase in resistance in storage can be obtained. The compound C may be directly arranged, or may be arranged interposing another layer (another compound), on the surface of the primary particle, but the former is preferable.

The compound C contains at least Li, B, P, and O. The compound C may be configured by only Li, B, P, and O, and may further contain additional element. Examples of the composition of the compound C may include $Li_aB_bP_cO_d$, wherein $0.5 \leq a \leq 1.5$, $0.5 \leq b \leq 1.5$, and $3.5 \leq c \leq 4.5$. The compound C having the composition above is typically $LiBPO_4$. Also, the compound C may be a compound in which $Li_3BPO_3$ and $Li_3PO_4$ are mixed together. $Li_3BPO_3$ and $Li_3PO_4$ are preferably in an amorphous state or a low crystalline state.

The compound C may be crystalline, and may be amorphous. Also, the compound C is preferably in a film shape. The definition of the film shape is as described above. Also, the thickness of the compound C is not particularly limited, and for example, it is 0.5 nm or more and 20 nm or less, and may be 1 nm or more and 15 nm or less.

The ratio of B included in the compound C when all the transition metals included in the primary particle is 1 part by mol is, for example, 0.001 parts by mol or more, may be 0.005 parts by mol or more, and may be 0.010 parts by mol or more. Meanwhile, the ratio of B included in the compound C is, for example, 0.100 parts by mol or less, may be 0.060 parts by mol or less, and may be 0.040 parts by mol or less.

The ratio of P included in the compound C when all the transition metals included in the primary particle is 1 part by mol is, for example, 0.001 parts by mol or more, may be 0.005 parts by mol or more, and may be 0.010 parts by mol or more. Meanwhile, the ratio of P included in the compound C is, for example, 0.100 parts by mol or less, may be 0.060 parts by mol or less, and may be 0.040 parts by mol or less.

In the compound C, the ratio of B to the total of B and P is, for example, 25 mol% or more and 75 mol% or less, may

be 30 mol% or more and 70 mol% or less, may be 35 mol% or more and 65 mol% or less, and may be 40 mol% or more and 60 mol% or less.

The coverage of the compound C to the primary particle is not particularly limited, but for example, it is 10% or more and 90% or less, may be 20% or more and 80% or less, and may be 30% or more and 70% or less. Also, the compound C (compound containing Li, B, P, and O) is arranged on a surface of the primary particle. The primary particle may or may not contain B. Similarly, the primary particle may or may not contain P.

5. Cathode active material

The cathode active material in the present disclosure is a single crystalline active material configured by a crystalline primary particle containing Li, TM, which is a transition metal, and O as a cathode active material. Further, the cathode active material includes the compound A, the compound B, and the compound C on a surface of the primary particle. The cathode active material is usually used for a battery. Also, there are no particular limitations on the method for producing the cathode active material, and examples thereof may include the method described in "D. Method for producing cathode active material" later.

The present disclosure can also provide a cathode active material powder including: a plurality of single crystalline active material configured by a crystalline primary particle containing Li, TM, which is a transition metal, and O, as a cathode active material, wherein at least a part of the plurality of single crystalline active material is a single crystalline active material X including a compound A containing La, Ni, and O, a compound B containing Li, W, and O, and a compound C containing Li, B, P, and O, on a surface of the primary particle. The single crystalline active material X is the same as the above described cathode active material. Also, the rate of the single crystalline active material X to all the cathode active materials in the cathode active material powder is, for example, 5 mass% or more, may be 10 mass% or more, may be 20 mass% or more, may be 30 mass% or more, may be 40 mass% or more, may be 50 mass% or more, may be 60 mass% or more, and may be 70 mass% or more.

B. Cathode mixture

The cathode mixture in the present disclosure contains the above described cathode active material.

According to the present disclosure, the above described cathode active material is used, and thus a cathode mixture capable of reducing the increase in resistance in storage may be achieved. The cathode mixture may contain other materials (such as a conductive material and a binder) in addition to the cathode active material. Also, the cathode mixture may contain the above described cathode active material powder. Also, the cathode mixture may be in a powder shape, and may be in a slurry shape containing a dispersion medium.

The rate of the cathode active material in a solid content of the cathode mixture is, for example, 20 mass% or more, may be 30 mass% or more and may be 40 mass% or more. If the rate of the cathode active material is too little, there is a possibility that sufficient energy density may not be obtained. Meanwhile, the rate of the cathode active material in the solid content of the cathode mixture is, for example, 95 mass% or less, may be 70 mass% or less and may be 60 mass% or less. If the rate of the cathode active material is too much, there is a possibility that the ion conductivity and the electron conductivity may be relatively degraded.

The cathode mixture may contain a conductive material. By adding the conductive material, electron conductivity improves. Examples of the conductive material may include a carbon-based material, a metal particle, and a conductive polymer. Examples of the carbon-based conductive material may include a particulate carbon material such as acetylene black (AB) and Ketjen black (KB), and a fiber carbon material such as vapor grown carbon fiber (VGCF), carbon nanotube (CNT), and carbon nanofiber (CNF).

The rate of the conductive material in the solid content of the cathode mixture is, for example, 0.1 mass% or more. If the rate of the conductive material is too little, there is a possibility that the electron conduction path may be insufficient. Meanwhile, the rate of the conductive material in the solid content of the cathode mixture is, for example, 5 mass% or less. If the rate of the conductive material is too much, the rate of the cathode active material would be relatively little, and there is a possibility the energy density may decrease.

The cathode mixture may contain a binder. By adding the binder, the cathode active material layer in which the cathode active material does not easily fall off can be obtained. Examples of the binder may include a rubber-based binder such as styrene butadiene rubber (SBR), and butadiene rubber (BR); a polycarbonate-based binder such as carboxymethylcellulose; and a fluoride-based binder such as polyvinylidene fluoride (PVdF).

The rate of the binder in the solid content of the cathode mixture is, for example, 0.5 mass% or more. If the rate of the binder is too little, there is a possibility that the falling off of the cathode active material may not be sufficiently inhibited. Meanwhile, the rate of the binder in the solid content of the cathode mixture is, for example, 15 mass% or less. If the rate of the binder is too much, the rate of the cathode active material would be relatively little, and there is a possibility the energy density may decrease.

C. Battery

FIG. 2 is a schematic cross-sectional view exemplifying the battery in the present disclosure. Battery 20 shown in FIG. 2 includes cathode active material layer 11, anode active material layer 12, electrolyte layer 13 arranged between the cathode active material layer 11 and the anode active material layer 12, cathode current collector 14 for collecting currents of the cathode active material layer 11, and anode current collector 15 for collecting currents of the anode active material layer 12. In the present disclosure, the cathode active material layer 11 contains the cathode mixture described in "B. Cathode mixture" above.

According to the present disclosure, by using the above described cathode mixture, a battery capable of reducing the increase in resistance in storage may be achieved.

1. Cathode active material layer

The cathode active material layer contains at least a cathode active material. Also, the cathode active material layer may contain a conductive material and a binder. The cathode active material, the conductive material, and the binder are in the same contents as those described in "A. Cathode active material" above and "B. Cathode mixture" above.

The cathode active material layer may contain an electrolyte. The electrolyte is, for example, the later described liquid electrolyte. Meanwhile, the cathode active material layer may contain a solid electrolyte. The thickness of the cathode active material layer is, for example, 0.1 μm or more and 1000 μm or less, may be 1 μm or more and 500 μm or less, and may be 30 μm or more and 100 μm or less.

There are no particular limitations on the method for producing the cathode active material layer, and examples thereof may include a method in which a cathode slurry containing a cathode active material and a dispersion medium is applied on the cathode current collector and dried. Pressing treatment may be performed to the cathode active material layer after drying. By the pressing treatment, density of the cathode active material layer improves.

2. Anode active material layer

The anode active material layer contains at least an anode active material. Examples of the anode active material may include a carbon-based active material, a Li-based active material, a Si-based active material, and an oxide-based active material.

Examples of the carbon-based active material may include graphite, soft carbon, and hard carbon. The graphite may be a natural graphite, and may be an artificial graphite. Examples of the Li-based active material may include Li and a Li alloy. Examples of the Li alloy may include a Li-Si alloy. Examples of the Si-based active material may include Si, a SiC composite active material, a Si alloy and a Si oxide. Examples of the SiC composite active material may include an active material in which a carbon carrier is supported by Si or a Si alloy. examples of the oxide-based active material may include a lithium titanate such as $Li_4Ti_5O_{12}$.

The rate of the anode active material in the anode active material layer is, for example, 20 mass% or more, may be 30 mass% or more and may be 40 mass% or more. If the rate of the anode active material is too little, there is a possibility that sufficient energy density may not be obtained. Meanwhile, the rate of the anode active material in the anode active material layer is, for example, 95 mass% or less, may be 70 mass% or less and may be 60 mass% or less. If the rate of the anode active material is too much, there is a possibility that the ion conductivity and the electron conductivity in the anode active material layer may be relatively degraded.

The anode active material layer may contain at least one of a conductive material, a binder, and an electrolyte. The details of the conductive material, the binder, and the electrolyte are in the same contents as those described in "1. Cathode active material layer" above. Also, the thickness of the anode active material layer is, for example, 0.1 μm or more and 1000 μm or less, may be 1 μm or more and 500 μm or less, and may be 30 μm or more and 100 μm or less.

There are not particular limitations on the method for producing the anode active material layer, and examples thereof may include a method in which an anode slurry containing an anode active material and a dispersion medium is applied on the anode current collector and dried. Pressing treatment may be performed to the anode active material layer after drying. By the pressing treatment, density of the anode active material layer improves.

3. Electrolyte layer

The electrolyte layer is a layer arranged between the cathode active material layer and the anode active material layer, and contains at least an electrolyte. The electrolyte is, for example, an electrolyte solution (liquid electrolyte).

Examples of the electrolyte may include a non-aqueous liquid electrolyte. The non-aqueous liquid electrolyte contains, for example, a lithium salt and a non-aqueous solvent. Examples of the lithium salt may include an inorganic lithium salt such as $LiPF_6$, $LiBF_4$, $LiClO_4$ and $LiAsF_6$; and an organic lithium salt such as $LiCF_3SO_3$, $LiN(SO_2CF_3)_2$,

$LiN(SO_2C_2F_5)_2$, and $LiC(SO_2CF_3)_3$.

Examples of the non-aqueous solvent may include a carbonate-based solvent such as ethylene carbonate (EC), propylene carbonate (PC), butylene carbonate (BC), dimethyl carbonate (DMC), diethyl carbonate (DEC), and ethyl methyl carbonate (EMC). The non-aqueous solvent may be a mixture of cyclic carbonate having high dielectric constant and high viscosity such as EC and PC with chain carbonate having low dielectric constant and low viscosity such as DMC, DEC, and EMC. The concentration of the lithium salt in the non-aqueous liquid electrolyte is, for example, 0.3 M or more and 5 M or less. Also, the non-aqueous liquid electrolyte may include an ionic solution. Examples of the ionic solution may include sulfonium salt, ammonium salt, pyridinium salt, piperidinium salt, pyrrolidinium salt, morpholinium salt, phosphonium salt, and imidazolium salt.

Examples of other electrolytes may include a water-based liquid electrolyte. The water-based liquid electrolyte is an electrolyte including water as a main component of the solvent. The proportion of water to all the solvent is, for example, 50 mass% or more, and may be 70 mass% or more. Examples of the lithium salt used in the water-based liquid electrolyte may include an imide-based electrolyte such as lithiumbis(fluorosulfonil)imide, and lithiumbis(trifluoromethanesulfonil) imide. The concentration of the lithium salt in water-based liquid electrolyte is, for example, 1 M or more and 25 M or less.

The electrolyte layer may include a separator impregnated with the above described liquid electrolyte. By arranging the separator, occurrence of short circuit can be inhibited. The separator is, for example, a porous film. Examples of the materials of the separator may include a resin such as polyethylene, polypropylene, polyester, polyvinyl alcohol, cellulose, and polyamide. Also, the electrolyte layer may contain a solid electrolyte. Examples of the solid electrolyte may include an organic solid electrolyte such as a polymer electrolyte and a gel electrolyte; and an inorganic solid electrolyte such as a sulfide solid electrolyte, an oxide solid electrolyte, and a halide solid electrolyte.

4. Battery

The battery in the present disclosure preferably includes a cathode current collector for collecting currents of the cathode active material layer, and an anode current collector for collecting currents of the anode active material layer. Examples of the material for the cathode current collector may include SUS, aluminum, nickel, iron, titanium, and carbon. Meanwhile, examples of the material for the anode current collector may include SUS, copper, nickel, and carbon. Also, the battery in the present disclosure may include an outer package for storing a power generation elements (the cathode active material layer, the electrolyte layer, and the anode active material layer). Examples of the outer package may include a case type outer package and a laminate type outer package.

The kind of the battery in the present disclosure is not particularly limited, but is typically a lithium ion battery. Also, the battery in the present disclosure may be a primary battery and may be a secondary battery, but preferably a secondary battery among them. The reason therefor is to be repeatedly charged and discharged and useful as a car-mounted battery for example. Examples of the applications of the battery may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the battery may be used as a power source for moving bodies other than vehicles (such as rail road transportation, vessel and airplane), and may be used as a power source for electronic products such as information processing equipment.

D. Method for producing cathode active material

FIG. 3 is a flow chart exemplifying the method for producing the cathode active material in the present disclosure. In FIG. 3, first, a first mixture that includes: a transition metal hydroxide containing the TM; a Li source; a La source; a W source; and a Ni source, is burned at a temperature $T_1$ to obtain a first burned body (first burning step). Next, the first burned body is burned at a temperature $T_2$ to obtain a second burned body (second burning step). Then, a second mixture produced by adding a B source and a P source to the second burned body, is burned at a temperature of $T_3$ to form a third burned body (third burning step). Thereby, a cathode active material is obtained. In the present disclosure, the temperature $T_2$ in the second burning step is lower than the temperature $T_1$ in the first burning step, and the temperature $T_3$ in the third burning step is lower than the temperature $T_2$ in the second burning step. Further, the temperature $T_1$, the temperature $T_2$, and the temperature $T_3$ are respectively in the specified range.

According to the present disclosure, by performing the first burning step, the second burning step and the third burning step, a cathode active material capable of reducing the increase in resistance in storage can be obtained.

1. First burning step

The first burning step is a step of burning a first mixture that includes: a transition metal hydroxide containing the TM; a Li source; a La source; a W source; and a Ni source, at a temperature $T_1$ to obtain a first burned body.

The transition metal hydroxide contains a TM, which is a transition metal. The transition metal hydroxide corresponds to a precursor of the cathode active material. The transition metal hydroxide typically does not contain Li, but may contain Li. Also, the transition metal hydroxide may or may not contain La. Also, the transition metal hydroxide may or may not contain W. Also, the transition metal hydroxide may or may not contain Ni.

There are no particular limitations on the method for synthesizing the transition metal hydroxide, and examples thereof may include a following method. First, a raw material aqueous solution of the transition metal hydroxide is prepared. Examples of the method for preparing the raw material aqueous solution may include a method in which the water soluble transition metal compound is dissolved in water. Examples of the transition metal compound may include a metal salt such as a sulfate and a nitrate. Examples of the Ni source may include $NiSo_4$, and $Ni(NO_3)_2$. Examples of the Co source may include $CoSO_4$, $Co(NO_3)_2$, and $Co(NO_3)_3$. Examples of the Mn source may include $MnSO_4$, and $Mn(NO_3)_2$. The composition of the raw material aqueous solution is appropriately adjusted in accordance with the intended cathode active material.

Next, a sodium hydroxide aqueous solution is added to a reaction container, and the raw material aqueous solution and $NH_3$ aqueous solution are dropped thereto while maintaining the pH alkaline (such as pH 11.3 to 12.0). The reaction temperature is not particularly limited, but for example, it is 50°C or more and 65°C or less. After the reaction completed, it is preferable to take out the transition metal hydroxide by filtrating, and to dry it after washing with water.

In the first burning step, a first mixture including a transition metal hydroxide, a Li source, a La source, a W source, and a Ni source, is prepared. Examples of the Li source may include lithium hydroxide, lithium carbonate, lithium nitrate, lithium acetate, lithium oxide, and lithium chloride. The Li source may be lithium hydroxide, and may be a Li-containing compound other than the lithium hydroxide. The molar ratio of Li in the Li source to the TM included in the transition metal hydroxide is, for example, 0.8 or more and 1.2 or less, may be 0.9 or more and 1.1 or less, and may be 1.0.

Examples of the La source may include a hydroxide; and a metal salt such as a sulfate and a nitrate. Examples of the La source may include $La(OH)_3$, $LaSO_4$, and $La(NO_3)_3$. Examples of the W source may include $H_2WO_4$. For example, when the transition metal hydroxide includes Ni, the transition metal hydroxide may also work as the Ni source. Meanwhile, when the transition metal hydroxide does not include Ni, it is necessary to use the Ni source separately. Examples of the Ni source may include $Ni(OH)_2$, $NiSO_4$, and $Ni(NO_3)_2$. The addition amounts of the La source, the W source, and the Ni source are appropriately adjusted in accordance with the intended cathode active material.

The first mixture preferably contains a molten salt. When the molten salt works as a flux, the primary particle can sufficiently grow. The molten salt may contain Li. Examples of the molten salt may include lithium hydroxide. The molar ratio (Li/TM) of Li included in the molten salt to the TM included in the transition metal hydroxide is, for example, 0.01 or more, may be 0.05 or more, may be 0.10 or more, and may be 0.15 or more. Meanwhile, the Li/TM is, for example, 0.60 or less, may be 0.50 or less, may be 0.40 or less, and may be 0.30 or less.

The first mixture may contain a lithium hydroxide as the Li source and the molten salt. The molar ratio (Li'/TM) of Li included in the Li source and the molten salt to the TM included in the transition metal hydroxide is, for example, 1.01 or more, may be 1.05 or more, may be 1.10 or more, and may be 1.15 or more. Meanwhile, the Li'/TM is, for example, 1.60 or less, may be 1.50 or less, may be 1.40 or less, and may be 1.30 or less.

In the first burning step, the first mixture is burned at the temperature $T_1$ to obtain a first burned body. The temperature $T_1$ is usually 500°C or more and 800°C or less, and may be 550°C or more and 750°C or less. When the temperature $T_1$ is too high, not the compound A containing La, Ni, and O, but $La_2O_3$ is easily generated, and it is difficult to achieve the reduction in resistance. Similarly, when the temperature $T_1$ is too high, not the compound B containing Li, W, and O, but $W_2O_3$ is easily generated, and it is difficult to achieve the reduction in resistance. Meanwhile, when the temperature $T_1$ is too low, it is difficult to sufficiently grow the primary particle.

The burning time in the first burning step is not particularly limited, and for example, it is 5 hours or more and 15 hours or less, and may be 8 hours or more and 12 hours or less. The atmosphere in the first burning step is usually an atmosphere wherein oxygen is present. Examples of the burning method in the first burning step may include a method using a burning furnace such as a muffle furnace and an electric furnace.

2. Second burning step

The second burning step is a step of burning the first burned body at a temperature $T_2$ to obtain a second burned body. The temperature $T_2$ in the second burning step is usually lower than the temperature $T_1$ in the first burning step. When the temperature $T_2$ is lower than the temperature $T_1$, not $La_2O_3$ but the compound A containing La, Ni, and O is easily generated, and the reduction in resistance can be achieved. Similarly, when the temperature $T_2$ is lower than the temperature $T_1$, not $WO_2O_3$ but the compound B containing Li, W, and O is easily generated, and the reduction in resistance can be achieved.

The difference between the temperature $T_1$ and the temperature $T_2$ is, for example, 50°C or more, may be 75°C or more, and may be 100°C or more. Also, the temperature $T_2$ is usually 400°C or more and 600°C or less, and may be 450°C or more and 550°C or less. When the temperature $T_2$ is too high, there is a possibility that $La_2O_3$ is easily generated.

Meanwhile, when the temperature $T_2$ is too low, there is a possibility that the effect of improving the electron conductivity by the compound A may not be sufficiently obtained. The burning time in the second burning step is not particularly limited, and for example, it is 1 hours or more and 5 hours or less, and may be 2 hours or more and 4 hours or less. The burning time in the second burning step may be shorter than the burning time in the first burning step. The atmosphere in the second burning step is usually an atmosphere wherein oxygen is present. Examples of the burning method in the second burning step may include a method using a burning furnace such as a muffle furnace and an electric furnace.

3. Third burning step

The third burning step is a step of burning a second mixture produced by adding a B source and a P source to the second burned body, is burned at a temperature of $T_3$ to form a third burned body. By forming the compound C, reduction in resistance increase in storage can be achieved.

Examples of the B source may include $H_3BO_3$. Examples of the P source may include a phosphate ($H_3PO_4$), a phosphite ($H_3PO_3$), a hypophosphite ($H_3PO_2$), and a metal phosphate. The adding amount of the B source and the adding amount of the P source are appropriately adjusted in accordance with the intended cathode active material.

The temperature $T_3$ in the third burning step is usually lower than the temperature $T_2$ in the second burning step. When the temperature $T_3$ is lower than the temperature $T_2$, the compound C can be formed while inhibiting deterioration of the compound A containing La, Ni, and O. Similarly, when the temperature $T_3$ is lower than the temperature $T_2$, the compound C can be formed while inhibiting deterioration of the compound B containing Li, W, and O.

The difference between the temperature $T_2$ and the temperature $T_3$ is, for example, 50°C or more, may be 75°C or more, and may be 100°C or more. Also, the temperature $T_3$ is usually 350°C or more and 550°C or less, and may be 400°C or more and 500°C or less. When the temperature $T_3$ is too high, there is a possibility that the compound A may be deteriorated. Meanwhile, when the temperature $T_3$ is too low, there is a possibility that the effect of reducing the resistance increase in storage by the compound C may not be sufficiently obtained. The burning time in the third burning step is not particularly limited, and for example, it is 2 hours or more and 8 hours or less, and may be 3 hours or more and 7 hours or less. The burning time in the third burning step may be longer than the burning time in the second burning step. The atmosphere in the third burning step is usually an atmosphere wherein oxygen is present. Examples of the burning method in the third burning step may include a method using a burning furnace such as a muffle furnace and an electric furnace.

4. Cathode active material

The cathode active material obtained by the above described each steps is in the same contents as those described in "A. Cathode active material" above.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

Examples

[Comparative Example 1]

<Production of cathode active material>

As raw materials, $NiSO_4$, $CoSO_4$, and $MnSO_4$ were prepared, and these were dissolved in an ion exchanged water to prepare a raw material aqueous solution. The ratio of Ni, Co, and Mn in the raw material aqueous solution was Ni : Co : Mn = 8 : 1 : 1 in the molar ratio. Also, the concentration of the raw material aqueous solution (ratio of all the raw materials to the raw material aqueous solution) was 30 mass%.

After that, fixed amount of $NH_3$ aqueous solution was put in a reaction container, and inside the reaction container was substituted with nitrogen by stirring with a stirrer. NaOH aqueous solution was added to the reaction container, and the raw material aqueous solution and $NH_3$ aqueous solution were dropped thereto while maintaining the pH alkaline (pH = 12) and controlling the temperature constant, and thereby a transition metal hydroxide was deposited. The reaction temperature was 60°C, and the reaction time was 10 hours. Next, the deposited transition metal hydroxide was taken out by filtration, and washed by adding an ion exchanged water and dispersing with a spoon. The transition metal hydroxide after washed by the water was dried in the conditions of 120°C and 16 hours, and thereby a transition metal hydroxide that was a precursor was obtained.

After that, a Li source (LiOH) was added to the obtained precursor, mixed with an agate mortar, and thereby a first mixture was obtained. The adding amount of the Li source was adjusted so that a molar ratio (Li/NMC) of Li included in the

Li source to the total of Ni, Co, and Mn included in the precursor became 1.1. The obtained first mixture was burned in a burning furnace in the conditions of 900°C, an oxygen atmosphere, and 10 hours, to obtain a burned body. The obtained burned body was crushed using jet milling, the particle size was adjusted, and thereby a cathode active material was obtained.

<Production of battery>

A battery was produced using the obtained cathode active material. In specific, a cathode mixture paste including a cathode active material, a conductive material (acetylene black), and a binder (polyvinylidene fluoride) in a mass ratio of the cathode active material : the conductive material : the binder = 88 : 10 : 2, was applied on a surface of a metal foil that was a cathode current collector using a film applicator with film thickness adjusting function (from Allgood Corporation). After that, the product was dried by a dryer at 80°C for 5 minutes, and a cathode including the cathode current collector and the cathode active material layer was obtained.

Next, an anode mixture paste including an anode active material (natural graphite) and a binder (SBR and CMC) was applied on a surface of a metal foil that was an anode current collector using a film applicator with film thickness adjusting function (from Allgood Corporation). After that, the product was dried by a dryer at 80°C for 5 minutes, and thereby an anode including the anode current collector and the anode active material layer was obtained. Next, as a liquid electrolyte, $LiPF_6$ solution having the concentration of 1 M was prepared. As the solvent of the liquid electrolyte, a mixture solvent in which ethylene carbonate (EC), dimethyl carbonate (DMC), and ethyl methyl carbonate (EMC) were mixed in a volume ratio of EC : DMC : EMC = 3 : 4 : 3 was used. By using the cathode, the anode, and the liquid electrolyte, a winding cylindrical shaped battery was obtained.

[Comparative Example 2]

A precursor (transition metal hydroxide) was obtained in the same manner as in Comparative Example 1. A Li source (LiOH), a La source ($La(OH)_3$), and a W source ($H_2WO_4$) were added to the obtained precursor, mixed with an agate mortar, and thereby a first mixture was obtained. The adding amount of the Li source was adjusted so that a molar ratio (Li/NMC) of Li included in the Li source to the total (NCM) of Ni, Co, and Mn included in the precursor became 1.1. Also, the adding amount of the La source was adjusted so that La/NCM became 0.005, and further, the adding amount of the W source was adjusted so that W/NCM became 0.005. A cathode active material and a battery were obtained in the same manner as in Comparative Example 1 except that the obtained first mixture was used.

[Reference Example 1]

A first mixture was obtained in the same manner as in Comparative Example 2. The obtained first mixture was burned in a burning furnace in the conditions of 650°C, an oxygen atmosphere, and 10 hours, to obtain a first burned body. The obtained first burned body was crushed using jet milling, and the burned in a burning furnace in the conditions of 500°C, an oxygen atmosphere, and 3 hours, and thereby a second burned body was obtained. The obtained second burned body was crushed using jet milling, the particle size was adjusted, and thereby a cathode active material was obtained. A battery was obtained in the same manner as in Comparative Example 1 except that the obtained cathode active material was used.

[Reference Example 2]

A cathode active material and a battery were obtained in the same manner as in Reference Example 1 except that the adding amount of the La and source and the adding amount of the W source were changed as shown in Table 1. Incidentally, in Table 1, synthesizing method 1 is a method in which one step of burning was performed as in Comparative Examples 1 and 2, and synthesizing method 2 is a method in which two steps of burning were performed as in Reference Examples 1 and 2.

[Evaluation]

<SEM-EDX measurement>

To the cathode active materials obtained in Reference Examples 1 and 2, cross-section observation and element analysis were performed by a scanning electron microscope - energy dispersive X-ray spectroscopy (SEM-EDX). As a result, it was confirmed that the primary particles in Reference Examples 1 and 2 had Ni, Co, and Mn. Also, in Reference Examples 1 and 2, a compound in a particle shape was confirmed on the surface of the primary particles, and it was

confirmed that the compound in the particle shape had La, Ni, and O from the mapping image.

<TEM-EDX measurement>

To the cathode active materials obtained in Reference Example 1, cross-section observation and element analysis were performed by a transmission electron microscope - energy dispersive X-ray spectroscopy (TEM-EDX). As a result, a compound in a film shape was confirmed on the surface of the primary particle in Reference Example 1, and it was confirmed that the compound in the film shape had W and O from the mapping image.

<XRD measurement>

An X-ray diffraction (XRD) measurement using a CuKα ray was respectively performed to the cathode active materials obtained in Reference Examples 1 and 2, and Comparative Examples 1 and 2. As a result, it was confirmed that all the cathode active materials obtained in Reference Examples 1 and 2, and Comparative Examples 1 and 2 had the layered rock salt type crystal phase belonging to the space group R-3m. In other words, it was confirmed that the primary particle containing Ni, Co, and Mn included the layered rock salt type crystal phase.

Also, in the cathode active material obtained in Reference Example 1, a peak derived from the crystal phase of LaNiO series ($La_4LiNiO_8$) was confirmed. For this reason, it was confirmed that the compound A present on the surface of the primary particle was crystalline. Meanwhile, in the cathode active material obtained in Reference Example 1, a peak derived from the crystal phase of LiWO series was not confirmed. For this reason, it is presumed that the compound B present on the surface of the primary particle was amorphous.

Meanwhile, in the cathode active material obtained in Comparative Example 2, a peak derived from the crystal phase of LaNiO series was not confirmed, but the peaks derived from $La_2O_3$ and $W_2O_3$ were confirmed. In other words, in the cathode active material obtained in Comparative Example 2, the compound A and the compound B in the present disclosure were not formed.

<Initial resistance>

The initial resistance of the batteries obtained in Reference Examples 1 and 2, and Comparative Examples 1 and 2, was respectively measured. In specific, the batteries were charged until 4.3 V, and then discharged until 3.7 V. After that, the voltage drop (V) when discharged for 10 seconds under the conditions of 0°C and each C rate of 0.1 C, 0.3 C, 0.5 C, 0.7 C, and 1.0 C was respectively measured. The relation of the voltage drop (V) with respect to the current value was plotted, and the inclination when a close to straight line was drawn by a linear function was defined as a resistance (IV resistance). The results are shown in Table 1. Incidentally, the value of initial resistance in Table 1 is the relative value when the initial resistance of Comparative Example 1 is regarded as 100%.

<Increase in cycle resistance>

The increase in cycle resistance was measured using the batteries obtained in Reference Examples 1 and 2, and Comparative Examples 1 and 2. In specific, the resistance (IV resistance) before and after the cycle test was measured. The cycle test was performed in the conditions of, the voltage range: 3.0 V to 4.3 V, C rate: 0.3 C, mode: CC charge and discharge, and temperature: 50°C for 100 cycles, and the increase in cycle resistance was obtained based on the below equation.

Increase in cycle resistance (%) = (Resistance after cycle test)/Initial resistance * 100

The results are shown in Table 1.

[Table 1]

| | Ratio | | | | | | Synthesizing method | Compound | | Initial resistance (%) | Increase in cycle resistance (%) |
|---|---|---|---|---|---|---|---|---|---|---|---|
| | Li | Ni | Co | Mn | La | W | | A | B | | |
| Comp. Ex. 1 | 1.1 | 0.8 | 0.1 | 0.1 | - | - | 1 | - | - | 100 | 145 |
| Comp. Ex. 2 | 1.1 | 0.8 | 0.1 | 0.1 | 0.005 | 0.005 | 1 | - | - | 101 | 154 |
| Ref. Ex. 1 | 1.1 | 0.8 | 0.1 | 0.1 | 0.005 | 0.005 | 2 | ○ | ○ | 92 | 128 |

(continued)

| | Ratio | | | | | | Synthesizing method | Compound | | Initial resistance (%) | Increase in cycle resistance (%) |
|---|---|---|---|---|---|---|---|---|---|---|---|
| | Li | Ni | Co | Mn | La | W | | A | B | | |
| Ref. Ex. 2 | 1.1 | 0.8 | 0.1 | 0.1 | 0.050 | - | 2 | ○ | - | 94 | 135 |

As shown in Table 1, it was confirmed that the initial resistance of Reference Example 2 was lower compared to Comparative Examples 1 and 2. It is presumed that, since the compound A (compound A containing La, Ni and O) with excellent electron conductivity was present on the surface of the primary particle, the movement of electrons was smooth. Also, it was confirmed that the initial resistance of Reference Example 1 was lower compared to Reference Example 2. It is presumed that, since the compound B (compound B containing Li, W and O) with excellent ion conductivity was present on the surface of the primary particle, the movement of ions was smooth. Also, it was confirmed that the increase in cycle resistance of Reference Example 1 was lower compared to Reference Example 2. It is presumed that, since the compound B (compound B containing Li, W and O) with appropriately low electron conductivity was present on the surface of the primary particle, the accumulation of the resistance component (decomposition product) by the side reaction due to electron conduction was inhibited.

[Comparative Example 3]

A precursor (transition metal hydroxide) was obtained in the same manner as in Comparative Example 1. A Li source (LiOH), a La source ($La(OH)_3$), a W source ($H_2WO_4$), a B source ($H_3BO_3$), and a P source ($H_3PO_4$) were added to the obtained precursor, mixed with an agate mortar, and thereby a first mixture was obtained. The adding amount of the Li source was adjusted so that a molar ratio (Li/NMC) of Li included in the Li source to the total (NCM) of Ni, Co, and Mn included in the precursor became 1.1. Also, the adding amount of the La source was adjusted so that La/NCM became 0.005, and further, the adding amount of the W source was adjusted so that W/NCM became 0.005. Also, the adding amount of the B source was adjusted so that B/NCM became 0.010, and further, the adding amount of the P source was adjusted so that P/NCM became 0.010. A cathode active material and a battery were obtained in the same manner as in Comparative Example 1 except that the obtained first mixture was used.

[Example 1]

A first mixture was obtained in the same manner as in Comparative Example 2. The obtained first mixture was burned in a burning furnace in the conditions of 650°C, an oxygen atmosphere, and 10 hours, to obtain a first burned body. The obtained first burned body was crushed using jet milling, and then burned in a burning furnace in the conditions of 500°C, an oxygen atmosphere, and 3 hours, and thereby a second burned body was obtained. The obtained second burned body was crushed using jet milling, and then a B source ($H_3BO_3$) and a P source ($H_3PO_4$) were added to obtain a second mixture. The adding amount of the B source was adjusted so that a molar ratio (B/NMC) of B included in the B source to the total (NCM) of Ni, Co, and Mn included in the precursor became 0.010. Also, the adding amount of the P source was adjusted so that P/NCM became 0.010. The obtained second mixture was burned in a burning furnace in the conditions of 450°C, an oxygen atmosphere, and 5 hours, to obtain a third burned body. The obtained third burned body was crushed using jet milling, the particle size was adjusted, and thereby a cathode active material was obtained. A battery was obtained in the same manner as in Comparative Example 1 except that the obtained cathode active material was used.

[Example 2]

A cathode active material and a battery were obtained in the same manner as in Example 1 except that the adding amount of the B source and the adding amount of the P source were changed as shown in Table 2. Incidentally, in Table 2, synthesizing method 3 is a method in which three steps of burning were performed as in Examples 1 and 2.

[Evaluation]

<SEM-EDX measurement>

To the cathode active materials obtained in Examples 1 and 2, cross-section observation and element analysis

were performed by a scanning electron microscope - energy dispersive X-ray spectroscopy (SEM-EDX). As a result, it was confirmed that the primary particles in Examples 1 and 2 had Ni, Co, and Mn. Also, in Examples 1 and 2, a compound in a particle shape was confirmed on the surface of the primary particles, and it was confirmed that the compound in the particle shape had La, Ni, and O from the mapping image.

<TEM-EDX measurement>

To the cathode active materials obtained in Examples 1 and 2, cross-section observation and element analysis were performed by a transmission electron microscope - energy dispersive X-ray spectroscopy (TEM-EDX). As a result, a compound in a film shape was confirmed on the surface of the primary particles in Examples 1 and 2, and it was confirmed that the compound in the film shape had W and O from the mapping image. Also, from the mapping image, it was confirmed that a compound in a film shape other than the above had B, P, and O.

<XRD measurement>

An X-ray diffraction (XRD) measurement using a CuKα ray was respectively performed to the cathode active materials obtained in Examples 1 and 2. As a result, in the cathode active materials obtained in Examples 1 and 2, a peak derived from the crystal phase of LaNiO series ($La_4LiNiO_8$) was confirmed. For this reason, it was confirmed that the compound A present on the surface of the primary particle was crystalline. Meanwhile, in the cathode active materials obtained in Examples 1 and 2, neither a peak derived from the crystal phase of LiWO series nor a peak derived from the crystal phase of LiBPO series was not confirmed. For this reason, it is presumed that the compound B and the compound C present on the surface of the primary particle were amorphous.

<Resistance increase in storage>

The resistance increase in storage was measured using the batteries obtained in Examples 1 and 2, Comparative Examples 1 and 3, and Reference Example 1. In specific, the resistance (IV resistance) before and after the storage test was measured. As the storage test, the batteries were stored for 60 days in the conditions of voltage of 4.2 V and a temperature of 60°C, and the resistance increase in storage was obtained based on the below equation.

Resistance increase in storage (%) = (Resistance after storage test)/Initial resistance * 100

The results are shown in Table 2.

[Table 2]

| | Ratio | | | | | | Element added | | Synthesizing method | Compound | | | Resistance increase in storage (%) |
|---|---|---|---|---|---|---|---|---|---|---|---|---|---|
| | Li | Ni | Co | Mn | La | W | Kind | Ratio | | A | B | C | |
| Comp. Ex. 1 | 1.1 | 0.8 | 0.1 | 0.1 | - | - | - | - | 1 | - | - | - | 165 |
| Comp. Ex. 3 | 1.1 | 0.8 | 0.1 | 0.1 | 0.005 | 0.005 | B<br>P | 0.010<br>0.010 | 1 | - | - | - | 166 |
| Ref. Ex. 1 | 1.1 | 0.8 | 0.1 | 0.1 | 0.005 | 0.005 | - | - | 2 | ○ | ○ | - | 140 |
| Example 1 | 1.1 | 0.8 | 0.1 | 0.1 | 0.005 | 0.005 | B<br>P | 0.010<br>0.010 | 3 | ○ | ○ | ○ | 122 |
| Example 2 | 1.1 | 0.8 | 0.1 | 0.1 | 0.005 | 0.005 | B<br>P | 0.020<br>0.020 | 3 | ○ | ○ | ○ | 115 |

As shown in Table 2, it was confirmed that the increase in resistance in storage of Examples 1 and 2 is respectively lower compared to Comparative Example 1 and 3, and Reference Example 1.

Reference Sings List

1 primary particle
10 cathode active material
11 cathode active material layer
12 anode active material layer
13 electrolyte layer
14 cathode current collector
15 anode current collector
20 battery

## Claims

1. A cathode active material **characterized by** comprising:

    a crystalline primary particle containing Li, TM, which is a transition metal, and O, wherein
    the cathode active material is a single crystalline active material configured by the primary particle; and
    the cathode active material includes a compound A containing La, Ni, and O, a compound B containing Li, W, and O, and a compound C containing Li, B, P, and O, on a surface of the primary particle.

2. The cathode active material according to claim 1, **characterized in that** a particle size of the primary particle is 0.5 μm or more.

3. The cathode active material according to claim 1, **characterized in that** the primary particle contains at least one kind of Ni, Co, and Mn as the TM.

4. The cathode active material according to claim 1, **characterized in that** the primary particle includes a layered rock salt type crystal structure.

5. The cathode active material according to claim 1, **characterized in that** the compound A is in a particle shape.

6. The cathode active material according to claim 1, **characterized in that** the compound B is in a film shape.

7. The cathode active material according to claim 1, **characterized in that** the compound C is amorphous.

8. A cathode mixture **characterized by** comprising the cathode active material according to any one of claims 1 to 7.

9. A battery comprising a cathode active material layer containing a cathode active material, an anode active material layer containing an anode active material, and an electrolyte layer arranged between the cathode active material layer and the anode active material layer, **characterized in that**
the cathode active material layer contains the cathode mixture according to claim 8.

10. A method for producing the cathode active material according to any one of claims 1 to 7, the method **characterized by** comprising:

    a first burning step of burning a first mixture that includes: a transition metal hydroxide containing the TM; a Li source; a La source; a W source; and a Ni source, at a temperature $T_1$ to obtain a first burned body,
    a second burning step of burning the first burned body at a temperature $T_2$ to obtain a second burned body, and
    a third burning step of burning a second mixture produced by adding a B source and a P source to the second burned body, at a temperature of $T_3$ to form a third burned body, wherein
    the temperature $T_2$ in the second burning step is lower than the temperature $T_1$ in the first burning step,
    the temperature $T_3$ in the third burning step is lower than the temperature $T_2$ in the second burning step,
    the temperature $T_1$ is 500°C or more and 800°C or less,
    the temperature $T_2$ is 400°C or more and 600°C or less, and
    the temperature $T_3$ is 350°C or more and 550°C or less.

11. The method for producing the cathode active material according to claim 10, **characterized in that** the transition metal hydroxide includes at least Ni as the TM, which is also used as the Ni source.

FIG. 1

10
A
1
B
C

FIG. 2

20
14
11
13
12
15

FIG. 3

First burning step
Second burning step
Third burning step
Cathode active material

# EUROPEAN SEARCH REPORT

Application Number
EP 26 15 7490

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| A | ZHANG HUJUN ET AL: "Perovskite-coated small-size single-crystalline W-doped Ni-rich cathodes with greatly enhanced power density for Li-ion batteries", JOURNAL OF MATERIALS CHEMISTRY A, vol. 12, no. 36, 1 September 2024 (2024-09-01), pages 24542-24548, XP093416007, GB ISSN: 2050-7488, DOI: 10.1039/d4ta04197f Retrieved from the Internet: URL:https://pubs.rsc.org/ta/article/12/36/24542/874266/Perovskite-coated-small-size-single-crystalline-W> * results and discussion * ----- | 1-11 | INV. C01G53/00 H01M4/00 H01M4/505 H01M4/525 |
| A | EP 3 996 171 A1 (BASF SHANSHAN BATTERY MAT NINGXIANG CO LTD [CN]) 11 May 2022 (2022-05-11) * paragraph [0010]; example 3 * ----- | 1-11 | |
| | | | TECHNICAL FIELDS SEARCHED (IPC) |
| A | JP 2019 102129 A (TOYOTA MOTOR CORP; SUMITOMO METAL MINING CO) 24 June 2019 (2019-06-24) * paragraphs [0023], [0059], [0068]; example 3 * ----- | 1-11 | C01G H01M |
| A | EP 3 282 506 A1 (LG CHEMICAL LTD [KR]) 14 February 2018 (2018-02-14) * paragraph [0044]; claims * ----- | 1-11 | |
| A | CN 109 742 375 A (BEIJING INSTITUTE TECH) 10 May 2019 (2019-05-10) * claims * ----- | 1-11 | |
| A | CN 113 445 127 B (UNIV CENTRAL SOUTH) 15 July 2022 (2022-07-15) * paragraph [0023]; figure 2; example 2 * ----- | 1-11 | |

The present search report has been drawn up for all claims

1

| Place of search | Date of completion of the search | Examiner |
|---|---|---|
| Munich | 14 July 2026 | Nobis, Barbara |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 26 15 7490

This annex lists the patent family members relating to the patent documents cited in the above-mentioned European search report. The members are as contained in the European Patent Office EDP file on
The European Patent Office is in no way liable for these particulars which are merely given for the purpose of information.

14-07-2026

| Patent document cited in search report | Publication date | Patent family member(s) | Publication date |
|---|---|---|---|
| EP 3996171 A1 | 11-05-2022 | CN 112186138 A | 05-01-2021 |
| | | EP 3996171 A1 | 11-05-2022 |
| | | JP 7318020 B2 | 31-07-2023 |
| | | JP 2022542774 A | 07-10-2022 |
| | | KR 20220019046 A | 15-02-2022 |
| | | US 2022416236 A1 | 29-12-2022 |
| | | WO 2021000868 A1 | 07-01-2021 |
| JP 2019102129 A | 24-06-2019 | CN 109841808 A | 04-06-2019 |
| | | JP 6904892 B2 | 21-07-2021 |
| | | JP 2019102129 A | 24-06-2019 |
| | | KR 20190062278 A | 05-06-2019 |
| | | US 2019165372 A1 | 30-05-2019 |
| EP 3282506 A1 | 14-02-2018 | CN 107636866 A | 26-01-2018 |
| | | EP 3282506 A1 | 14-02-2018 |
| | | JP 6755534 B2 | 16-09-2020 |
| | | JP 2018533157 A | 08-11-2018 |
| | | KR 20170063396 A | 08-06-2017 |
| | | PL 3282506 T3 | 30-09-2019 |
| | | US 2018294477 A1 | 11-10-2018 |
| | | US 2019372115 A1 | 05-12-2019 |
| CN 109742375 A | 10-05-2019 | NONE | |
| CN 113445127 B | 15-07-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022542774 A
- JP 2024511223 A